# EUROPEAN PATENT SPECIFICATION

(11) **EP 2 091 858 B1**
(45) Date of publication and mention of the grant of the patent: **05.01.2011**
(21) Application number: 07847121.6
(22) Date of filing: 07.11.2007
(51) Int. Cl.: B67D 3/00

(54) **AN INVENTORY SYSTEM FOR LIQUIDS DISPENSED FROM A CONTAINER**
INVENTARSYSTEM FÜR AUS BEHÄLTERN AUSGEGEBENE FLÜSSIGKEITEN
SYSTÈME D'INVENTAIRE POUR LIQUIDES DISTRIBUÉS À PARTIR D'UN RÉCIPIENT

(30) Priority: 08.11.2006 SE 0602372
(43) Date of publication of application: 26.08.2009
(73) Proprietor: Valgate Ltd., 2012 Acropolis, Nicosia (CY)
(72) Inventor: GABLER, Richard, 411 28 Göteborg (SE); FROST, John, 11360 Stockholm (SE); JOHANSSON, David, 168 57 Bromma (SE)
(74) Representative: Karlsson, Leif Karl Gunnar
(86) International application number: PCT/EP2007/062003
(87) International publication number: WO 2008/055929

(56) References cited:
- US-A- 2 458 331
- US-A- 5 507 411
- US-A- 6 036 055

## Description

### Field of the invention

The invention relates to an inventory system for liquids, a pourer spout and a method for measuring liquid outflow from a container.

### Background of the invention

Traditionally, bars and other establishments serving alcohol have limited or no control over the alcohol flow, not distinguishing what kind of beverage is being sold. In a bar there is no actual quantity measurement - a bartender can steal, spill, give away, or over pour liquor without the management being able to trace the source. Currently the most common principal method for monitoring inventory and spillage is by mapping sales versus purchases and thereafter calculating profitability. A comparison is then made of real profitability contra forecast based upon the sales prices. As a rule these two figures always differ. This does not provide insight into the consumption of an individual beverage product or where spillage or waste/loss occurs. An average bar owner is losing between 5 and 15 % of the bars liquor to "spillage".

Attempts have been made to control the volumes consumed by means of particular dispensing systems.

US2005194402 discloses a system which includes pourer spouts. The pourer spouts estimate the volume exiting the bottle by means of a bottle tilt sensor that activates a time measurement combined with pre-programmed viscosity and flow rate values. These pourer spouts are therefore liquor dependant and can not be used for any other liquor than the one they are set up for. Another flaw with this system is that it does not actually measure the flow of the liquid, an empty bottle tilted will activate the time measurement and register that a pour has been performed even though the bottle is empty.

US3920149 discloses a dispensing system that uses a central unit and magnetically regulated pourers. The pourers cannot dispense unless they are used in combination with the special activator ring which is attached to the central unit. The central unit is set to a specific portion size and the activator ring regulates the flow from the bottle. The central unit can handle only one bottle at a time and that the bartender needs to pour at a predetermined location. This severely limits the bartender's flexibility.

A pourer spout according to the preamble of claim 1 is disclosed in US-A- 5 507 411.

Thus, there is a need for an inventory system for liquids that is flexible, reliable, accurate and simple.

### Summary of the invention

The object of the present invention is to provide an inventory system for liquids that avoids the drawbacks of the prior art. This object is achieved by the pourer spout, the method for measuring liquid outflow and the inventory system according to the enclosed claims.

The pourer spout comprises an air flow measurement unit. Further, the pourer spout may comprise a sealing means, a liquid flow through passage, an air ventilation passage and a transmission unit, wherein the airflow measurement unit is adapted to measure the airflow through the air ventilation passage. The airflow measurement unit may comprise a first temperature sensor for determining a first temperature, and a second temperature sensor for determining a second temperature. The pourer spout may further comprise a heating device arranged in the air ventilation passage, wherein the heating device can be positioned inbetween the temperature sensors. Further yet, the pourer spout may comprise a data processing unit for comparing the first and second temperatures. Preferably, the pourer spout is barcode marked.

The present pourer spout can be used in an inventory system for liquids. This system comprises, apart from one or several pourer spouts, at least one bar terminal at least one barcode scanner and at least one signal receiver adapted for communication with said pourer spout. Optionally, the system also comprises a central server. This system can integrate a pourer spout and a corresponding container by alternately reading the barcode on the pourer spout and a barcode on the container.

According to the invention, the method determines liquid outflow from a container, by measuring the flow of air through said air ventilation passage.

### Brief description of the drawings

Figure 1 is a side view of the pourer spout in cross section
Figure 2 is a back side view of the pourer spout in figure 1
Figures 3-5 illustrate the integration of a pourer spout with a corresponding bottle
Figure 6 is a table illustrating the result of the integration in figures 3-5

### Detailed description of the invention

The purpose of the system according to the present invention is to hinder theft, giveaways and spill, thus greatly decreasing an establishment's liquor costs.

The present invention provides an inventory system for liquids, a tool for tacking and storing information. By utilizing Radio Frequency Identification (RFID), pourer spouts, bottles and inventory are combined in a wireless network. Integrated into the system is an inventory software that records which beverages have been poured and in what quantities, enabling the management to see detailed statistics over all alcohol dispensed.

The system comprises pourer spouts, a receiver, a barcode scanner, and a bar terminal. Optionally, a central server can be used to collect information from a plurality of bar terminals. The pourer spouts have several functions that separate them from traditional pourer spouts; they have an integrated barcode, the ability to measure the volume poured, and they are able to transmit this information.

A fundamental principle behind the present system is the fact that no work routines need to be altered when the system is in use. This makes the system serviceable in any type of bar no matter the size or establishment type. Separating the system into the different components and being able to buy them as separate products enables a bar owner to compose a package suited for the his/her specific needs. For example, a smaller bar can buy a pack of pourer spouts, a receiver, a barcode scanner, a software license and run the system on an available computer. A larger business with multiple bars may need several packs of pourers, several receivers and barcodes scanners, and a bar terminals for every bar along with their respective licenses, and a central server.

The system process begins with a request from the customer. Once a drink is ordered, the bartender pours the customer a beverage. Briefly, this activates the pourer spout, which transmits information of the sale including the pourer spout identification number and volume to a bar terminal via a receiver. After handing the customer the requested drink, the bartender charges and uses the cash register as usual. Bartenders will work as before as there is no need to diverge from current procedures. The special features of the pourer spout are invisible to customers and lets the bartenders do their job unsupervised. All events sent by the pourer spouts via the receivers to the software are presented in real time for monitoring and analyzing by management.

A pourer spout is connected to a corresponding liquor bottle in the bar terminals by scanning the barcodes on the pourer spout and the bottle respectively, this is hereafter referred to as barcodes integration. Generally, a barcode is present on all liquor bottles sold. If not, separate labels with barcode markings may be attached to bottles without barcodes. Since every pourer spout has a unique identification number, the bar terminal will recognize every pourer spout's signals and associate them with the corresponding spirit. Pouring a drink results in the bar terminal receiving the information sent by the pourer spout; pourer spout identification number and amount of liquor leaving the bottle. The bar terminal then stores this data together with a timestamp and the liquor brand. Since all bottles in the bar are equipped with pourer spouts, the bar terminal attains a compete overview of all liquor dispensed in the bar. If there are more than one bar terminal, information from the terminals is forwarded to a central server that monitors the inventory status of all spirits in the bars, supporting management in controlling and maintaining inventory levels.

The flow measurement according to the present invention is based on measuring them airflow into the bottle. The volume of the air flowing into the bottle is equivalent to the volume of the liquid exiting the bottle. In fact, prior art pourer spouts do not actually measure any flow, neither a liquid flow nor an airflow, instead, the liquid flow is calculated from information regarding liquid viscosity, bottle tilt and/or pouring time. The present way of measuring is independent of the liquor viscosity, i.e. the pourer spout can be attached to any bottle in the bar, without being specifically programmed. The present barcode integration and identification of spirits enables this function by allowing easy transfer of pourer spouts from one bottle to another. A further advantage of measuring the airflow is that there are no moving parts that can be subject to mechanical jamming, and no liquid flow measuring means that can be subject to clogging. The bartender can work as usual, free pour and handle the bottles without obstacles.

The system helps in managing liquor businesses more effectively by recording the fluid flow out of the bottles. Bar owners know exactly who's pouring what and when, giving them the power to better control inventory, reduce over pours and theft, track bar stock, and overall reduce liquor costs. The system instantly provides information on how much bartenders are serving to their customers.

Below, the system is described as having several pourer spouts but only one bar terminal. In larger establishments, several bar terminals, all communicating with the central server, can be put to use. For instance, an establishment can have bar terminals in the restaurant, in the night club and on the terrace etc. Several bar terminals can also be arranged in the same bar.

### Flow measurement

The volume of liquid exiting the bottle is determined by measuring the volume of air replacing the liquid in the bottle. By using this air-measuring technique, the liquid flow rate out of the bottle as well as the liquid type can be disregarded. One pourer spout can be used for any kind of liquid, regardless of the viscosity, temperature, etc.

One possible method for the airflow measurement is briefly described below. A heating element injects a minute constant amount of heat into a flow measurement section of the air ventilation pipe. Two temperature sensors, positioned symmetrically upstream and downstream of the heat source respectively, detect the temperature difference between their positions in the flow measurement section, thus providing basis information about the distribution of the caloric energy in the air. This is the fundamental information needed to subsequently calculate the actual total flow.

This method has advantages in terms of high accuracy, low power consumption, short response time (in the order of a few milliseconds), short power-up time, wide operating temperature range, high mechanical shock resistance, essentially no vibration sensitivity, low price and small size. In addition to the wide temperature operating range, changes in liquid and air viscosity due to high or low temperatures have a negligible effect on the measurement.

Further, this method for measuring the volume of a liquid exiting a bottle is not limited to bottles. The pourer spout can easily be adapted for use with any kind of rigid liquid enclosing container.

Apart from the calorimetric principle, there are several other possible solutions at hand for measuring the airflow. The invention shall not be limited to a specific airflow measurement method. Alternative solutions include providing the flow measurement section with a paddle wheel or a venturi meter.

### The pourer spout

The main function of the pourer spout, apart from assisting the user in accurately dispensing the liquid, is to measure the volume of liquid exiting a bottle or a similar container, and to transmit the measured amount together with the pourer spout identification number to a receiver unit connected to the bar terminal. This requires the pourer spout to comprise four specific parts; a volume measuring unit, a data processing unit, a RFID transmission unit and a battery.

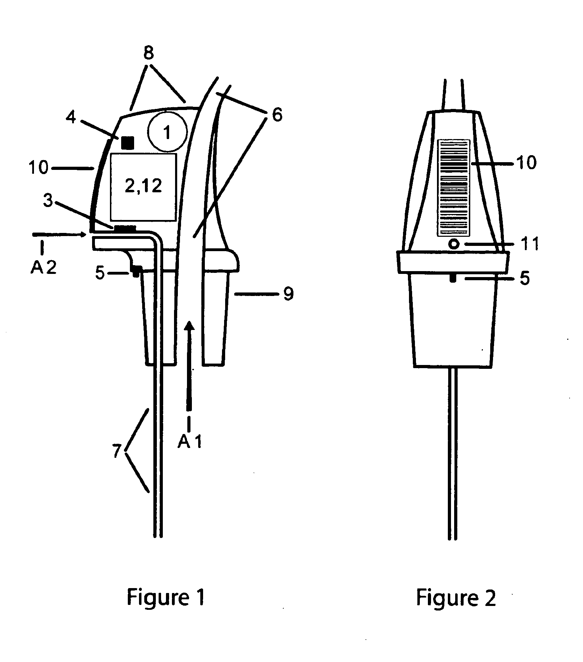

The following detailed description of the pourer spout, with reference to figures 1 and 2, is to be considered as a non-limiting example of a preferred embodiment according to the invention.

The pourer spout comprises a liquid flow passage, through which liquid is dispensed from the bottle as indicated at A1. The liquid flow through passage is preferably in the form of a pipe 6 running through the pourer spout. The liquid flow pipe 6 reaches from inside the bottle neck, through the pourer spout, and to the outside of the pourer spout. Inside the bottle neck, the liquid flow pipe 6 runs parallel with the bottle neck axis and ends close to the inner surface of the pourer spout. Preferably, the liquid flow pipe 6 ends on the same level as said surface. Within the pourer spout, a curvature causes the liquid flow pipe 6 to diverge from the bottle neck axis. With regard to the bottle neck axis, the liquid flow pipe 6 extends obliquely from the outer side of the pourer spout. The outer end of the liquid flow pipe 6 extends from the outer surface of the pourer spout, thereby facilitating the liquid dispensing operation.

The pourer spout further comprises an air ventilation passage to allow air to enter the bottle as indicated at A2. The air ventilation passage is provided in order replace the liquid that leaves the bottle through the liquid flow through passage 6 with air. Said passage is preferably in the form of an airflow pipe 7, in accordance with the liquid flow through pipe 6 mentioned above. The air pipe 7 runs through the pourer spout in essentially the same manner as the liquid pipe 6. One important difference is the fact that the air pipe 7 reaches further into the bottle than does the liquid pipe 6. Preferably, the air pipe 7 extends all the way through the bottle neck and into the bottle body. It is essential that the air pipe 7 extends further into the bottle than the liquid pipe 6. The pressure difference, upon pouring, between the inner opening of the air pipe 7 and the liquid pipe 6 ensures that the liquid exits through the liquid pipe 6 and not through the air pipe 7. The pressure must be lower at the inner opening of the air pipe 7 than at the inner opening of the liquid pipe 6. This relationship should be important to all pouring spouts, but in the present case, the outer end of the air ventilation passage 7 does not have to extend from the surface of the pourer spout. In the present embodiment, the air pipe 7 exhibits a right angle within the pourer spout and forms an opening 11 (figure 2) in the side wall of the pourer spout outside the bottle neck.

As shown in figure 2, the pourer spout is provided with a barcode 10 in order to enable the barcode integration, as will be described in detail later.

The pourer spout may also be furnished with a tilt switch 4, allowing the electronic equipment to enter a "sleep" mode when the bottle, and thus the pourer spout, is put in an upright position. Subsequent pouring affects the tilt switch 4 that activates the electronic equipment in the pourer spout.

Adjacent the upper side of a sealing cork 9, preferably a rubber cork, which tightly seals the interface between the pourer spout and the bottle, a switch 5 for bottle on/off detection is arranged. When the pourer spout is put on a bottle by pressing the rubber cork 9 down the bottle neck, the switch 5 for bottle on /of detection is pushed in by the bottle rim, wherein the electronics in the pourer spout are activated and the sending of a signal containing an "on bottle" message to the terminal receiver is triggered. When a pourer spout is removed from a bottle, the switch 5 for bottles on /of detection is deactivated and an "off bottle" message is sent to the terminal. With the switch in "off bottles" mode, the electronics are set in a "deep sleep" mode to minimize power consumption.

A battery 1 providing the electronic components with power is integrated into the pourer spout.

To meet the physical requirements, all electronic parts of the pourer spout are encapsulated in a plastic cover 8 making it insensitive to impacts and water immersion.

In one embodiment of the invention, the airflow through the air ventilation passage 7 is measured by means of the calorimetric principle. According to this, a low effect heating element heats the air in the air ventilation passage 7. A first temperature sensor determines the temperature of the incoming air upstream of the heating element. A second temperature sensor determines the temperature of the air downstream of the heating element. The temperature sensors and the heating element are arranged in the airflow measurement unit 3 in figure 1. The temperatures determined by the first temperature sensor and the second temperature sensor are compared by a data processing unit (DPU) 12 in a microchip. The DPU 12 comprises an AD converter, a microprocessor, and a memory, all of which are standard components. By means of the values from the first and second temperature sensors, the DPU 12 can determine the speed of the airflow, and thus the volume of air entering the bottle. The air volume entering the bottle equals the volume of liquid, exiting the bottle. Subsequently, this volume information is transferred from the data processing unit 12 to an RFID transmission unit 2, also present in the microchip. and sent to the RFID receiver.

According to other embodiments of them invention, the airflow through the air ventilation passage is determined by a paddle wheel or a venturi meter.

### The bar terminal

The bar terminal receives information from the pourer spout via a signal receiver, connected to the bar terminal. More specifically, the RFID transmission unit 2 of the pourer spout provides the bar terminals via a RFID receiver unit with volume measurement data together with a pourer spout identification number.

Further, a barcode scanner S1 is connected to the bar terminals. By means of this scanner S1, the user can furnish the bar terminal with the identification number of the pourer spout and also the particle number of the corresponding bottle (barcode integration).

In an optional central server information from several bar terminals can be collected and analysed collectively.

### Barcode integration

After all parts, i.e. the bar terminal, the receiver, the barcode scanner, the pourer spouts and, optionally, the central server, have been properly set up and connected and the software has been installed, the pourer spouts can be paired together with the corresponding bottles. This action is performed by using the barcode scanner to read the barcodes of the pourer spouts and the bottles respectively. The system has a build in intelligence that allows the user to read the barcode of a first pourer spout, and successively the barcode of the corresponding first bottle, where after the pourer spout and the bottle are matched together in the system. If, instead, the barcode of the bottle is read first, the system awaits a barcodes containing a pourer spout identification number coming next. Thus, at set up, the user scans the barcodes of the corresponding pourer spouts and the bottles alternately, and the system automatically pairs the pourer spouts and the bottles together. This integration procedure can of course be carried out either before or after the pourer spouts have been attached to the bottles, but preferably, in a first step, all bottles are provided with pourer spouts where after, in a second step, the barcode integration is quickly performed.

If the barcode integration is omitted, i.e. a pourer spout is attached to a bottle without reading the barcodes of the pourer spout and the bottle respectively, subsequent pouring will nevertheless result in the pourer spout measuring the poured volume and transmitting this information together with the pourer spout identification number to the terminal. The terminal will in this case not be able to tell what kind of liquor that has been dispensed. However, it is possible to afterwards supply the terminal with information regarding what kind of liquor that has been poured by performing a later barcode integration.

When a bottle has been emptied, the user removes the pourer spout from the bottle and arranges it on a new bottle. Upon barcode integration of the pourer spout and the new bottle, the system registers that a new bottle has been introduced. As mentioned above, the integration can be carried out independently of the order in which the barcodes of the pourer spout and the bottle are read.

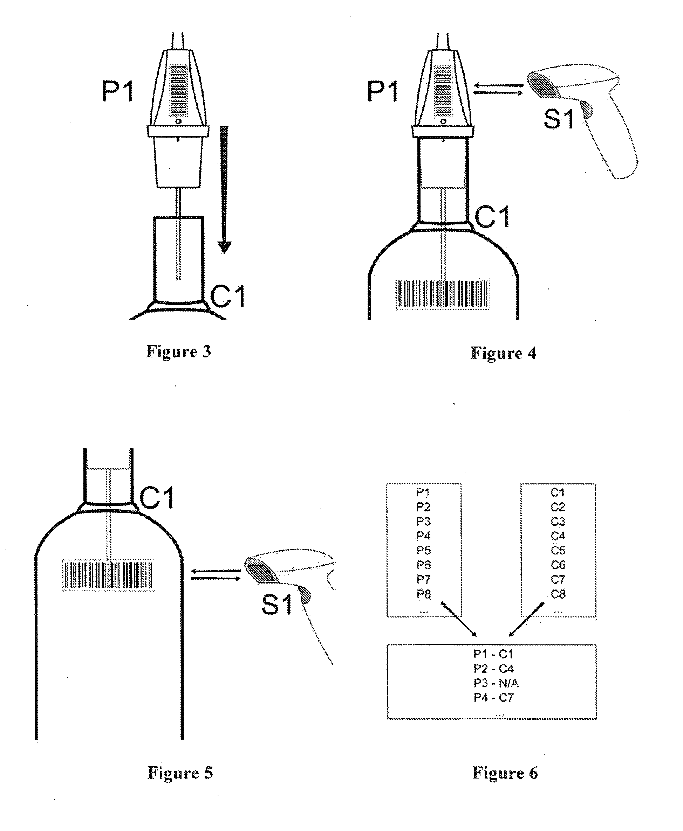

An illustrative non-limiting example of how the barcode integrations can be performed is described below, with reference to figures 3-6.

Figure 3 shows a container/bottle C1 (thereafter referred to as bottle) neck and a part of a bottle body. A pourer spout P1 carrying a barcode is pushed down into the bottle C1 neck.

In figure 4, the poorer spout P1 is tightly arranged in the bottle C1 neck and kept there by sealing means in the form of a rubber cork 9. The bottle carries a barcode. A. barcode scanner S1 reads the barcode on the pourer spout P1.

The next step of the barcode integration is shown in figure where the barcode or the bottle is read by the barcode scanner S1.

Figure 6 illustrate the result of the barcode integration. The first two tables show the pourer spouts P1-P8, and the bottles C1-C8, that have been registered in the system. Finally, the third and lowermost table lists how the pourer spouts have been integrated with the bottles. In this example, the barcode of pourer spout PI was read by the barcodes scanner S1 in succession before the barcode of bottle C1 was read (figures 4 and 5), thus, the P1 is connected to C1 in the lower table of figure 6. Again, the order in which the barcodes of the pourer spouts and the bottles are registered is not important; hence, the actions of figures 4 and 5 in the example above can change place. The two barcodes should be scanned within a reasonable time interval, in the range of e.g. 0.5 to 5 seconds. This time interval is adjusted to the individual needs of the integration procedure.

## Claims

1. A pourer spout for a container in a bar or other establishment serving alcohol or other liquids, said container being suitable for containing liquid, and said pourer spout being suitable for serving liquid from said container and adapted for use in an inventory system for liquids,
***characterized in that***
said pourer spout comprises an airflow measurement unit (3).

2. The pourer spout of claim 1, wherein the pourer spout further comprises a sealing means (9) for sealing the interface between said pourer spout and said container;
a liquid flow through passage (6);
an air ventilation passage (7);
a transmission unit (2);
and wherein said airflow measurement unit (3) is adapted to measure the airflow through said air ventilation passage (7).

3. The pourer spout of claim 2, wherein said airflow measurement unit (3) comprises a first temperature sensor for determining a first temperature, and a second temperature sensor for determining a second temperature.

4. The pourer spout of claims 2 or 3, wherein said airflow measurement unit (3) further comprises a heating device, and said heating device is arranged in said air ventilation passage (7).

5. The pourer spout of claim 3 and 4, wherein said heating device is positioned between said first temperature sensor and said second temperature sensor.

6. The pourer spout of claim 3, wherein the pourer spout further comprises a data processing unit (12) for comparing said first and second temperatures.

7. The pourer spout of any one of claims 1-6, wherein said pourer spout is barcode (10) marked.

8. An inventory system for liquids, said system comprising
at least one pourer spout (P1) according to any one of claims 1-7;
at least one barcode scanner (S1);
at least one signal receiver adapted for communication with said pourer spout; and
at least one bar terminal suitable for receiving information from said signal receiver,

9. The system according to claim 7 and 8, wherein said system is adapted for integrating a pourer spout and a corresponding container by alternately reading the barcode on the pourer spout (P1) and a barcode on the container (C1).

10. A method for measuring liquid outflow from a container through a pourer spout according to claim 2, said method comprising measuring the flow of air through said air ventilation passage (7) with said airflow measurement unit (3).

11. The use of a pourer spout according to any one of claims 1-7 as means for measuring the amount of liquid being poured through said pourer spout in an inventory system for liquids.

12. The use according to claim 11, wherein said system is adapted for integrating a pourer spout and a corresponding container by alternately reading the barcode on the pourer spout (P1) and a barcode on the container (C1).

## Patentansprüche

1. Ausgießer für einen Behälter in einer Bar oder einer anderen Einrichtung, wo Alkohol oder andere Flüssigkeiten ausgeschenkt werden, wobei der Behälter dafür geeignet ist, eine Flüssigkeit zu enthalten, und der Ausgießer dafür geeignet ist, eine Flüssigkeit aus dem Behälter auszuschenken, und für die Verwendung in einem Inventarsystem für Flüssigkeiten eingerichtet ist,
***dadurch gekennzeichnet, dass***
der Ausgießer eine Luftstrom-Messeinheit (3) umfasst.

2. Ausgießer nach Anspruch 1, wobei der Ausgießer ferner das Folgende umfasst:
ein Dichtungsmittel (9) zum Abdichten der Schnittstelle zwischen dem Ausgießer und dem Behälter;
einen Durchtritt zum Durchfließen von Flüssigkeiten (6);
einen Belüftungsdurchtritt (7);
eine Sendeeinheit (2);
und wobei die Luftstrom-Messeinheit (3) dafür eingerichtet ist, den Luftstrom durch den Belüftungsdurchtritt (7) zu messen.

3. Ausgießer nach Anspruch 2, wobei die Luftstrom-Messeinheit (3) einen ersten Temperatursensor zum Bestimmen einer ersten Temperatur und einen zweiten Temperatursensor zum Bestimmen einer zweiten Temperatur umfasst.

4. Ausgießer nach Anspruch 2 oder 3, wobei die Luftstrom-Messeinheit (3) ferner eine Heizvorrichtung umfasst und die Heizvorrichtung in dem Belüftungsdurchtritt (7) angeordnet ist.

5. Ausgießer nach Anspruch 3 und 4, wobei die Heizvorrichtung zwischen dem ersten Temperatursensor und dem zweiten Temperatursensor angeordnet ist.

6. Ausgießer nach Anspruch 3, wobei der Ausgießer ferner eine Datenverarbeitungseinheit (12) zum Vergleichen der ersten und der zweiten Temperatur umfasst.

7. Ausgießer nach einem der Ansprüche 1 bis 6, wobei der Ausgießer mit einem Balkencode (10) **gekennzeichnet** ist.

8. Inventarsystem für Flüssigkeiten, wobei das System das Folgende umfasst:
mindestens einen Ausgießer (P1) nach einem der Ansprüche 1 bis 7;
mindestens einen Balkencode-Scanner (S1);
mindestens einen Signalempfänger, der für einen Datenaustausch mit dem Ausgießer eingerichtet ist; und
mindestens ein Endgerät der Bar, welches dafür geeignet ist, von dem Signalempfänger Daten zu empfangen.

9. System nach Anspruch 7 und 8, wobei das System dafür geeignet ist, einen Ausgießer und einen entsprechenden Behälter zu integrieren, indem wechselweise der Balkencode auf dem Ausgießer (P1) und ein Balkencode auf dem Behälter (C1) gelesen wird.

10. Verfahren zum Messen des Flüssigkeitsausflusses aus einem Behälter durch einen Ausgießer nach Anspruch 2, wobei das Verfahren das Messen des Luftstroms durch den Belüftungsdurchtritt (7) mit der Luftstrom-Messeinheit (3) umfasst.

11. Verwendung eines Ausgießers nach einem der Ansprüche 1 bis 7 als Mittel zum Messen der Flüssigkeitsmenge, die durch den Ausgießer gegossen wird, in einem Inventarsystem für Flüssigkeiten.

12. Verwendung nach Anspruch 11, wobei das System dafür eingerichtet ist, einen Ausgießer und einen entsprechenden Behälter zu integrieren, indem wechselweise der Balkencode auf dem Ausgießer (P1) und ein Balkencode auf dem Behälter (C1) gelesen wird.

## Revendications

1. Bec verseur pour un récipient dans un bar ou un autre établissement servant de l'alcool ou d'autres liquides, ledit récipient étant approprié pour contenir un liquide, et ledit bec verseur étant approprié pour servir du liquide dudit récipient et adapté pour l'utilisation dans un système d'inventaire pour liquides,
***caractérisé en ce que***
ledit bec verseur comprend une unité de mesure d'écoulement d'air (3).

2. Bec verseur selon la revendication 1, dans lequel le bec verseur comprend en outre
un moyen d'étanchéité (9) pour étanchéifier l'interface entre ledit bec verseur et ledit récipient ;
un passage de circulation de liquides (6) ;
un passage de ventilation à air (7) ;
une unité de transmission (2) ;
et dans lequel ladite unité de mesure d'écoulement d'air (3) est adaptée pour mesurer l'écoulement d'air à travers ledit passage de ventilation à air (7).

3. Bec verseur selon la revendication 2, dans lequel ladite unité de mesure d'écoulement d'air (3) comprend un premier capteur de température pour déterminer une première température, et un second capteur de température pour déterminer une seconde température.

4. Bec verseur selon les revendications 2 ou 3, dans lequel ladite unité de mesure d'écoulement d'air (3) comprend en outre un dispositif de chauffage, et ledit dispositif de chauffage est agencé dans ledit passage de ventilation à air (7).

5. Bec verseur selon les revendications 3 et 4, dans lequel ledit dispositif de chauffage est positionné entre ledit premier capteur de température et ledit second capteur de température.

6. Bec verseur selon la revendication 3, dans lequel le bec verseur comprend en outre une unité de traitement de données (12) pour comparer lesdites première et seconde températures.

7. Bec verseur selon l'une quelconque des revendications 1 à 6, dans lequel ledit bec verseur est marqué d'un code-barres (10).

8. Système d'inventaire pour liquides, ledit système comprenant
au moins un bec verseur (P1) selon l'une quelconque des revendications 1 à 7 ;
au moins un scanner de code-barres (S1) ;
au moins un récepteur de signaux adapté pour la communication avec ledit bec verseur ; et
au moins un terminal de bar approprié pour recevoir des informations dudit récepteur de signaux.

9. Système selon les revendications 7 et 8, dans lequel ledit système est adapté pour intégrer un bec verseur et un récipient correspondant en lisant alternativement le code-barres sur le bec verseur (P1) et un code-barres sur le récipient (C1).

10. Procédé de mesure de débit de liquide d'un récipient à travers un bec verseur selon la revendication 2, ledit procédé comprenant la mesure de l'écoulement d'air à travers ledit passage de ventilation à air (7) avec ladite unité de mesure d'écoulement d'air (3).

11. Utilisation d'un bec verseur selon l'une quelconque des revendications 1 à 7 en tant que moyen pour mesurer la quantité de liquide étant versée à travers ledit bec verseur dans un système d'inventaire pour liquides.

12. Utilisation selon la revendication 11, dans lequel ledit système est adapté pour intégrer un bec verseur et un récipient correspondant en lisant alternativement le code-barres sur le bec verseur (P1) et un code-barres sur le récipient (C1).
